# EUROPEAN PATENT SPECIFICATION

(11) **EP 1 854 527 B1**
(45) Date of publication and mention of the grant of the patent: **18.01.2012**
(21) Application number: 06291307.4
(22) Date of filing: 11.08.2006
(51) Int. Cl.: B01D 35/18

(54) **Fuel filter assembly**
Kraftstofffilteranordnung
Assemblage de filtre à carburant

(30) Priority: 10.05.2006 GB 0609246
(43) Date of publication of application: 14.11.2007
(73) Proprietor: Delphi Technologies Holding S.à.r.l., 4940 Bascharage (LU)
(72) Inventor: Monnier, Franck, 27930 Guichainville (FR)
(74) Representative: Gregory, John David Charles

(56) References cited:
- EP-A- 0 162 939
- EP-A1- 1 101 519
- WO-A-02/06662
- DE-A1- 3 443 717
- GB-A- 2 265 095
- US-B1- 6 328 883

## Description

### Technical Field

The present invention relates to a fuel filter assembly having an integral electrical heater.

### Background of the Invention

It is known to provide a fuel filter assembly with an electrical heater to avoid problems of "waxing", especially during cold start. There are various known designs, including a stick heater which can be screw fitted to the filter housing or bowl; or a self-contained heater which is attached to the filter housing; or an electric heater moulded into a plastics cover for the filter. With the need to increase the strength of the filter assembly, there is a desire to manufacture the filter housing, and the fuel inlet and outlet ports from metallic material. The known arrangements for an electrical heater are not suitable for such an assembly.

Examples of known filter assemblies are described in prior art documents EP 1101519 and US 6,328,883. EP 1101519 describes a filter having a heating element that can be removed without removing the cover plate. US 6,328,883 describes a filter having a discrete chamber within which a fuel heater is located.

### Summary of the Invention

It is an object of the present invention to overcome the above-mentioned problem.

A fuel filter assembly in accordance with the present invention comprises a filter housing having an open end; a cover plate for sealably closing the open end of the housing; a filter cartridge positioned inside the housing and having a surface positioned adjacent the cover plate; a fuel inlet port mounted on the cover plate; a chamber between the cover plate and the cartridge surface, the chamber being fluidly connected with the fuel inlet port and having an outlet for fuel flow through the filter cartridge; and an electrical heater positioned in the chamber.

The chamber is preferably defined by walls formed in the surface of the cartridge. Alternatively, the chamber may be defined by a combination of walls formed in the surface of the cartridge and the cover plate.

The electrical heater is preferably secured to the cover plate. Alternatively, the electrical heater may be secured to the surface of the filter cartridge. The electrical heater is part of a removable sub-assembly. The electrical heater is in the form of a heater plate.

The cover plate is preferably fixedly secured to the housing. Alternatively, the cover plate may be removable.

The housing and/or the cover plate and/or the inlet port are preferably made from metallic material. Alternatively, one or more of the housing, the cover plate or the inlet port may be made from plastics material.

The present invention provides a fuel filter assembly with an electrical heater, in which the filter housing, cover plate, and fuel inlet port may all be fabricated from metallic material when such a need arises.

### Brief Description of the Drawings

The present invention will now be described, by way of example, with reference to the accompanying drawings, in which:

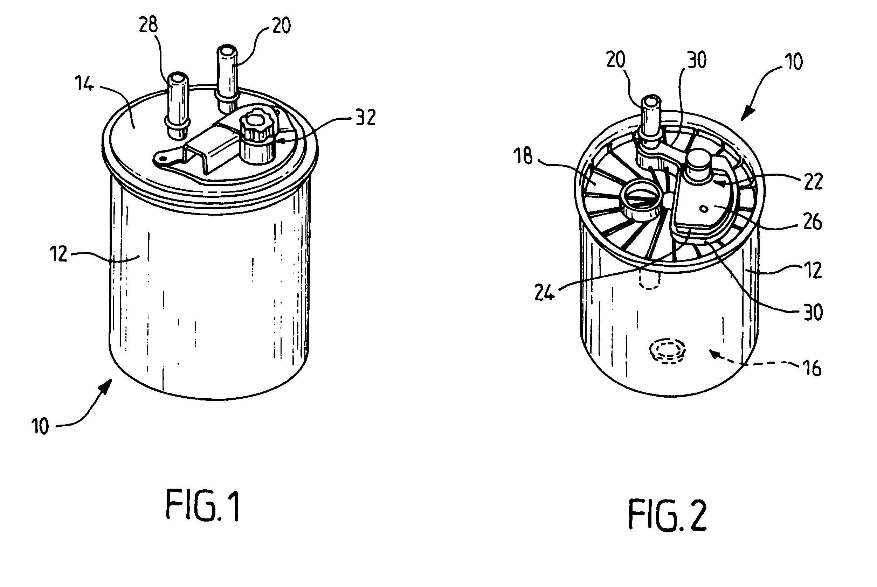

Figure 1 is a perspective view of a fuel filter assembly in accordance with an embodiment of the present invention;
Figure 2 is a perspective view of the assembly of Figure 1 with the cover removed; and

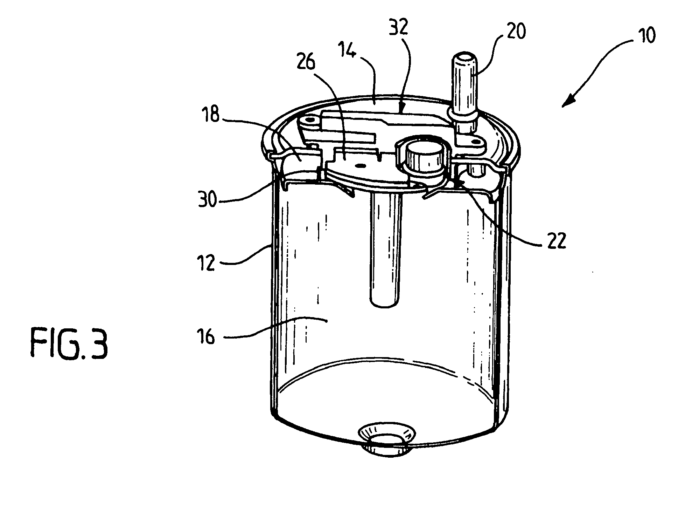

Figure 3 is a cross-sectional view of the assembly of Figure 1 with the cartridge removed.

### Description of the Preferred Embodiment

Referring to the drawings, the fuel filter assembly 10 comprises a filter housing 12 having an open end; a cover plate 14 for sealably closing the open end of the housing; a filter cartridge 16 positioned inside the housing and having a surface 18 positioned adjacent the cover plate; a fuel inlet port 20 mounted on the cover plate for the flow of fuel into the filter assembly; a chamber 22 between the cover plate and the cartridge surface, the chamber being fluidly connected with the fuel inlet port and having an outlet 24 for fuel flow through the filter cartridge; and an electrical heater 26 positioned in the chamber. The filter assembly 10 also includes a fuel outlet port 28 for the flow of fuel out of the filter assembly after passing through the filter cartridge 16.

In this embodiment, the chamber 22 is defined by walls 30 formed in the surface 18 of the filter cartridge 16. The electrical heater 26 is secured to the cover plate 14, preferably by screws or any other suitable arrangement. The electrical heater 26 is part of a removable sub-assembly 32 including suitable electrical connections which can be removed when the filter assembly requires servicing or replacing. The electrical heater 26 is in the form of a heater plate.

The cover plate 14 is fixedly secured to the housing 12. Alternatively, the cover plate 14 may be removable from the housing 12 to allow replacement of the filter cartridge 16.

The housing 12, the cover plate 14, the inlet port 20, and the outlet port 28 are made from metallic material.

## Claims

1. Fuel filter assembly (10) comprising a filter housing (12) having an open end; a cover plate (14) for sealably closing the open end of the housing (12); a filter cartridge (16) positioned inside the housing (12) and having a surface (18) positioned adjacent the cover plate (14); a fuel inlet port (20) mounted on the cover plate (14); a chamber (22) between the cover plate (14) and the cartridge surface (18), the chamber (22) being fluidly connected with the fuel inlet port (20) and having an outlet (24) for fuel flow through the filter cartridge (16); and an electrical heater (26) positioned in the chamber (22) wherein the electrical heater (26) is part of a removeable sub-assembly
**characterised in that** the chamber (22) is defined by the cover plate (14), the cartridge surface (18) and walls (30), formed in the surface of the cartridge (18), or a combination of walls formed in the surface of the cartridge (18) and cover plate (14),
wherein the heater is in the form of a heater plate and includes suitable electrical connections.

2. Fuel filter according to claim 1, wherein the electrical heater (26) is secured to the cover plate (14).

3. Fuel filter according to claim 1 or 2, wherein the electrical heater (26) is secured to the surface (18) of the filter cartridge (16).

4. Fuel filter according to any preceding claim, wherein the cover plate (14) is fixedly secured to the housing (12).

5. Fuel filter according to any of claims 1 to 4, wherein the cover plate (14) is removable.

6. Fuel filter according to any preceding claim, wherein the housing (12) and/or the cover plate (14) and/or the inlet port (20) are made from metallic material.

7. Fuel filter according to any preceding claim, wherein one or more of the housing (12), the cover plate (14) or the inlet port (20) are made from plastics material.

8. Fuel filter according to any one of claims 1 to 6, wherein the filter housing (12), cover plate (14), and fuel inlet port (20) are all fabricated from metallic material.

## Patentansprüche

1. Kraftstofffilteranordnung (10), umfassend ein Filtergehäuse (12) mit einem offenen Ende, eine Deckelplatte (14) zum abdichtbaren Verschließen des offenen Endes des Gehäuses (12), eine Filterpatrone (16), die im Inneren des Gehäuses (12) positioniert ist und eine Oberfläche (18) hat, die neben der Deckelplatte (14) liegt, einen an der Deckelplatte (14) angebrachten Kraftstoffeinlassanschluss (20), eine Kammer (22) zwischen der Deckelplatte (14) und der Patronenoberfläche (18), wobei die Kammer (22) fluidisch mit dem Kraftstoffeinlassanschluss (20) verbunden ist und einen Auslass (24) für Kraftstoffdurchfluss durch die Filterpatrone (16) hat, und ein elektrisches Heizgerät (26), das in der Kammer (22) positioniert ist, wobei das elektrische Heizgerät (26) Teil einer abnehmbaren Baugruppe ist, **dadurch gekennzeichnet, dass** die Kammer (22) von der Deckelplatte (14), der Patronenoberfläche (18) und Wänden (30), die in der Oberfläche der Patrone (18) ausgebildet sind, oder einer Kombination von Wänden, die in der Oberfläche der Patrone (18) und der Deckelplatte (14) ausgebildet ist, definiert wird, wobei das Heizgerät die Form einer Heizplatte hat und geeignete elektrische Verbindungen beinhaltet.

2. Kraftstofffilter nach Anspruch 1, wobei das elektrische Heizgerät (26) an der Deckelplatte (14) befestigt ist.

3. Kraftstofffilter nach Anspruch 1 oder 2, wobei das elektrische Heizgerät (26) an der Oberfläche (18) der Filterpatrone (16) befestigt ist.

4. Kraftstofffilter nach einem der vorhergehenden Ansprüche, wobei die Deckelplatte (14) fest an dem Gehäuse (12) befestigt ist.

5. Kraftstofffilter nach einem der Ansprüche 1 bis 4, wobei die Deckelplatte (14) abnehmbar ist.

6. Kraftstofffilter nach einem der vorhergehenden Ansprüche, wobei das Gehäuse (12) und/oder die Deckelplatte (14) und/oder der Einlassanschluss (20) aus metallischem Material hergestellt sind.

7. Kraftstofffilter nach einem der vorhergehenden Ansprüche, wobei eines oder mehrere von Gehäuse (12), Deckelplatte (14) oder Einlassanschluss (20) aus Kunststoff hergestellt ist/sind.

8. Kraftstofffilter nach einem der Ansprüche 1 bis 6, wobei das Filtergehäuse (12), die Deckelplatte (14) und der Kraftstoffeinlassanschluss (20) alle aus metallischem Material hergestellt sind.

## Revendications

1. Ensemble formant filtre à carburant (10) comprenant un boîtier de filtre (12) ayant une extrémité ouverte ; une plaque de couverture (14) pour fermer de manière étanche l'extrémité ouverte du boîtier (12) ; une cartouche de filtre (16) positionnée à l'intérieur du boîtier (12) et ayant une surface (18) positionnée adjacente à la plaque de couverture (14) ; un orifice d'entrée de carburant (20) monté sur la plaque de couverture (14) ; une chambre (22) entre la plaque de couverture (14) et la surface (18) de la cartouche, la chambre (22) étant connectée de manière fluidique à l'orifice d'entrée de carburant (20) et ayant une sortie (24) pour un courant de carburant à travers la cartouche de filtre (16) ; et un dispositif chauffant électrique (26) positionné dans la chambre (22), le dispositif chauffant électrique (26) faisant partie d'un sous-ensemble amovible,
**caractérisé en ce que** la chambre (22) est définie par la plaque de couverture (14), par la surface (18) de la cartouche et par des parois (30) formées dans la surface (18) de la cartouche, ou par une combinaison de parois formées dans la surface (18) de la cartouche et dans la plaque de couverture (14), dans lequel le dispositif chauffant a la forme d'une plaque chauffante et inclut des connexions électriques appropriées.

2. Filtre à carburant selon la revendication 1, dans lequel le dispositif chauffant électrique (26) est attaché sur la plaque de couverture (14).

3. Filtre à carburant selon la revendication 1 ou 2, dans lequel le dispositif chauffant électrique (26) est attaché sur la surface (18) de la cartouche de filtre (16).

4. Filtre à carburant selon l'une quelconque des revendications précédentes, dans lequel la plaque de couverture (14) est attachée de manière fixe au boîtier (12).

5. Filtre à carburant selon l'une quelconque des revendications 1 à 4, dans lequel la plaque de couverture (14) est amovible.

6. Filtre à carburant selon l'une quelconque des revendications précédentes, dans lequel le boîtier (12) et/ou la plaque de couverture (14) et/ou l'orifice d'entrée (20) sont réalisés en matériau métallique.

7. Filtre à carburant selon l'une quelconque des revendications précédentes, dans lequel un ou plusieurs éléments parmi le boîtier (12), la plaque de couverture (14) ou l'orifice d'entrée (20) sont réalisés en matière plastique.

8. Filtre à carburant selon l'une quelconque des revendications 1 à 6, dans lequel le boîtier de filtre (12), la plaque de couverture (14) et l'orifice d'entrée (20) sont tous fabriqués en matériau métallique.
